# EUROPÄISCHE PATENTSCHRIFT

(11) **EP 0 614 758 B1**
(45) Veröffentlichungstag und Bekanntmachung des Hinweises auf die Patenterteilung: **16.09.1998**
(21) Anmeldenummer: 94102899.5
(22) Anmeldetag: 25.02.1994
(51) Int. Cl.: B32B 27/32

(54) **Mehrschichtige, gereckte, heisssiegelbare Polypropylenfolie**
Multilayered, stretched, heat-sealable polypropylene film
Feuille multicouche étirée thermosoudable en polypropylène

(30) Priorität: 10.03.1993 DE 4307442
(43) Veröffentlichungstag der Anmeldung: 14.09.1994
(73) Patentinhaber: WOLFF WALSRODE AKTIENGESELLSCHAFT, D-29699 Walsrode (DE)
(72) Erfinder: Brandt, Rainer, Dr., D-29664 Walsrode (DE); Reiners, Ulrich, Dr., D-29643 Neuenkirchen (DE); Krallmann, Anton, Dipl.-Ing., D-29683 Fallingbostel (DE); Böhner, Jürgen, Dipl.-Ing., D-29699 Bomlitz (DE); Neelen, Neele, Dr., D-29683 Fallingbostel (DE)
(74) Vertreter: Braun, Rolf, Dr.

(56) Entgegenhaltungen:
- EP-A- 0 222 295
- EP-A- 0 468 333
- DE-A- 3 940 173

## Beschreibung

Die Erfindung betrifft eine mehrschichtige, heißsiegelbare Polypropylenfolie mit verbesserter Wasserdampfsperrwirkung und verminderter Globalmigration. Die, die Erfindung betreffende Folie weist als kennzeichnende Merkmale eine Basisschicht aus Polypropylen und Kohlenwasserstoffharz, zwei die Basisschicht ummantelnde Schichten (die im folgenden Mantelschichten genannt werden) aus hochisotaktischem Polypropylen, frei von Kohlenwasserstoffharz, und zwei heißsiegelfähige Deckschichten aus einem olefinischen Co- oder Terpolymer auf. Die Globalmigration ist ein Maß für die Gesamtmenge der Teilchen, welche beim Kontakt Folie/(Füllgut insbesondere Lebensmittel) aus der Folie in das Füllgut wandern. Ähnliche Anmeldungen mit gleichem Prioritätstag sind die EP 0 614 756 und EP 0 614 757.

Die Anwendung von Kohlenwasserstoffharzen zur Modifikation von Polypropylenfolien ist an sich bekannt und ist Gegenstand zahlreicher Patentanmeldungen bzw. Veröffentlichungen.

In EP-B 247 898 wird eine Polypropylenfolie beschrieben, die durch Zusatz von Kohlenwasserstoffharz verbesserte mechanische und optische Eigenschaften aufweist, zusätzlich werden verbesserte Barriereeigenschaften gegen Wasserdampf und Sauerstoff beschrieben.

In EP-A 468 333 wird eine dreischichtige kohlenwasserstoffharzhaltige Polypropylenfolie beschrieben, die verbesserte Barriereeigenschaften hinsichtlich Wasserdampf und Sauerstoff bei gleichzeitiger verbesserter Maschinengängigkeit hat.

In EP-B 217 388 wird eine kohlenwasserstoffharzhaltige Polypropylenfolie beschrieben, deren Eigenschaften bezüglich Bonbondreheinschlag (Twistverhalten) verbessert ist.

In EP-A 479 101 wird ebenfalls eine harzhaltige Polypropylenfolie beschrieben, deren Twisteigenschaft verbessert ist.

In EP-A 488 010 wird eine harzhaltige, metallisierbare Dreheinschlagfolie beschrieben.

Die verbesserte mechanische Festigkeit einer harzhaltigen Polypropylenfolie wird in EP-A 406 642 beschrieben.

In EP-A 400 456 wird eine kohlenwasserstoffharzhaltige Polypropylenfolie für die Schrumpfetikettenanwendung beschrieben, und in EP-A 489 373 wird eine kohlenwasserstoffharzhaltige Polypropylenfolie mit verbesserten Schrumpf- und Barriereeigenschaften beschrieben.

Obwohl viele der in diesen Veröffentlichungen beschriebenen Folien für das Verpacken von Lebensmitteln entwickelt wurden, zeigen alle hochwasserdampfdichten Folien des bekannten Standes der Technik schlechte, d.h. hohe Globalmigrationswerte. Aufgabe der vorliegenden Erfindung war es daher, eine Folie bereitzustellen, die eine möglichst niedrige Globalmigration bei gleichzeitig guten Sperreigenschaften für Wasserdampf aufweist und daher problemlos im Lebensmittelbereich eingesetzt werden kann.

Gelöst wird diese Aufgabe durch eine Folie gemäß Patentanspruch 1. Bevorzugte Merkmale bestehen darin, daß die Basisschicht aus Polypropylen, zusätzlich ein Kohlenwasserstoffharz, in einer Menge von 1 bis 40 Gew.-%, insbesondere 5 bis 30 Gew.-% (die hier im folgenden angegebenen Gew.-%-Angaben beziehen sich auf die jeweilige Schicht), enthält.

Bevorzugt wird für die Basisschicht ein isotaktisches Polypropylen mit einem Schmelzpunkt von 160°C bis 170°C eingesetzt, welches dadurch gekennzeichnet ist, daß der Schmelzflußindex (MFI) im Bereich von 1 g/10 min. bis 9 g/10 min., insbesondere von 1,6 bis 4,2 g/10 min. bei 230°C und 2,16 kp Belastung (DIN 53 735), liegt.

Bei dem niedrigmolekularen Kohlenwasserstoffharz handelt es sich um ein Harz, das dadurch gekennzeichnet ist, daß der Erweichungspunkt >130°C ist. (ASTM E 28) In der Literatur (s.o. EP 468 333) ist bekannt, daß das Einarbeiten eines solchen Harzes zur Verbesserung der Wasserdampfbarriereeigenschaften, der optischen Eigenschaften und der mechanischen Eigenschaften führt. Die Kohlenwasserstoffharze lassen sich in drei Gruppen gliedern: die Petroleumharze, die Terpenharze und die Harze aus dem Kohlenteer. Aus der Gruppe der Petroleumharze werden bevorzugt die Cyclopentadien-, die Styrol- und Methylstyrolharze eingesetzt. Es handelt sich um oligomere Polymere oder Copolymere mit Molmassen, die kleiner als 2000 g/mol sind. Da die Polypropylenfolien gewöhnlicherweise farblos, transparent gefertigt werden, ist es notwendig, die Harze in Gegenwart eines Katalysators möglichst vollständig zu hydrieren. Die Harze der Terpengruppe enthalten im wesentlichen oligomere, hydrierte Polymere aus den Monomeren Pinen, β-Pinen und Dipenten (D, L Limonen) und werden auch zur Modifikation von Polypropylen eingesetzt. Für die Verbesserung der Wasserdampfbarriere des Polypropylens eignen sich ganz besonders die hydrierten oligomeren Cyclopentadienharze (HOCP), deren Erweichungspunkt größer oder gleich 130°C ist.

Die Mantelschichten sind frei von Kohlenwasserstoffharz und Erucasäureamid, sie enthalten ein hochisotaktisches Polypropylen, welches dadurch gekennzeichnet ist, daß die Isotaktizität größer oder gleich 94 % ist.

(Meßmethode: ¹³C-NMR; J.C. Randall, J. Polym. Sci.: J. Polym. Phys. Ed. 12, 703-712 (1974) und gleiche Zeitschrift: 14, 1693-1700 (1976). Bevorzugt wird ein Material mit einem Schmelzpunkt von 158 bis 170°C.

Desweiteren können die Mantelschichten einen Haftvermittler enthalten, der zur Gruppe der säuremodifizierten Polypropylene oder zur Gruppe der säuremodifizierten Propylen/Olefin-Copolymere gehört. Unter den säuremodifizierten Propylenen versteht man Maleinsäure oder Acrylsäure, gepfropfte oder copolymerisierte Polypropylene. Bevorzugt werden die Maleinsäure-gepfropften Haftvermittler, die dadurch gekennzeichnet sind, daß ihr Schmelzindex [MFI] (2,16/230) zwischen 1 g/10 min. und 10 g/10 min., insbesondere zwischen 2 g/10 min. und 5 g/10 min., liegt. Die Dicke der Mantelschichten liegt zwischen 0,5 µm und 2 µm.

Um eine gute Maschinengängigkeit bei guten Siegeleigenschaften zu gewährleisten, ist es notwendig, die Siegel- bzw. Deckschichten mit Additiven auszustatten. Unter den zahlreichen, für solche Schichten eingesetzten Materialien, werden folgende bevorzugt eingesetzt:
- statistische Propylen/Ethylen-Copolymere
- statistische Propylen/Buten(1)-Copolymere
- statistische Propylen/Ethylen/Olefin-Terpolymere
- Mischungen aus zwei oder drei der vorstehenden Polymere.

Besonders bevorzugt wird ein Copolymer, welches 90 bis 99 % Polypropylen und 1,0 bis 10 % Polyethylen enthält, Dieses Siegelschichtmaterial ist dadurch gekennzeichnet, daß es einen Schmelzpunkt von 110°C bis 150°C, insbesondere 120°C bis 140°C, hat.

Als Additive, die zur besseren Maschinengängigkeit beitragen, werden Antistatika, Gleitmittel und Antiblockmittel eingesetzt.

Antistatika sind Substanzen, die über einen hydrophilen Molekülteil und einen langkettigen hydrophoben Kohlenwasserstoffrest verfügen. In den Folien richten sich diese Substanzen so aus, daß der hydrophile Teil an der Oberfläche der Folie Wasser anlagern kann, woraus eine Erniedrigung des Oberflächenwiderstandes resultiert, die letztlich die antistatische Wirkung ausmacht. Bevorzugt werden die ethoxylierten Amine eingesetzt, insbesondere N-(C₁₂-C₁₈-alkyl)-N',N''-bis-(2-hydroxyethyl)-amine verbinden die Forderung nach dr lebensmittelrechtlichen Unbedenklichkeit und antistatischer Wirkung.

Als Gleitmittel werden Amide der Carbonsäuren eingesetzt. Typische Beispiele sind Erucasäureamid und Ölsäureamid. Weiterhin werden Polymere aus der Gruppe der Polyalkylsiloxane eingesetzt.

Bevorzugte Antiblockmittel sind Siliciumdioxid, Silikate oder Polymere, die nicht mit den Deckschichtrohstoffen mischbar sind (z.B. Polycarbonat, Polyamid, Polymethylmethacrylat).

Überraschenderweise zeigte sich, daß der Einbau zweier derartig dünner Mantel- und Deckschichten den Globalmigrationswert der Folie unter Beibehaltung der guten Wasserdampfsperrwirkung um mehr als 30 % reduziert.

Die erfindungsgemäßen Folien können nach den üblichen Verfahren wie Laminierung, Beschichtung oder Schmelzcoextrusion hergestellt werden. Nach der Extrusion und der Verfestigung des Dickfilms auf der Gießwalze wird der Film in Laufrichtung (längs) mit einem Verstreckungsquotienten von 4/1 bis 7/1 bei einer Temperatur von 120°C bis 150°C gereckt. Das Reckverhältnis in Querrichtung liegt vorzugsweise zwischen 8/1 und 12/1 und das Querrecken des Filmes wird bei einer Temperatur zwischen 130°C und 170°C vorgenommen. Die nachfolgende Thermofixierung wird vorzugsweise bei 1°C bis 40°C unter der Querrecktemperatur durchgeführt. Um die Affinität der weitgehend unpolaren Folienoberfläche zu den Druckfarben zu gewährleisten, ist es nötig, die Folie einer Corona-(Sprüh)Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung.

### Beispiel 1

Mittels dem oben beschriebenen Verfahren wurde eine biaxial orientierte Folie (Flächenreckverhältnis: 45/1; Längsrecktemperatur: 142°C; Querrecktemperatur: 160°C) hergestellt, die folgenden Aufbau aufwies:
- Gesamtdicke:: 15 µm

### Deckschichten

- Dicke:: 1 µm
- Material:: Propylen/Ethylencopolymer mit 3,5 % Ethylenanteil, MFI: 5,0 g/10 min., 0,25 % SiO₂, mittlere Teilchengröße: 2,0 µm, 0,7 % Polydimethylsiloxan (Viskosität: 106 cSt;
DIN 53 019/25°C)

### Mantelschichten

- Dicke:: 1 µm
- Material:: hochisotaktisches Polypropylen; Isotaktizität: 97 %, MFI: 3,5 g/10 min.

### Kernschicht:

- Dicke:: 11 µm
- Material:: 70 % isotaktisches Polypropylen mit einem MFI von 3,0 g/10 min.
30 % Kohlenwasserstoffharzmasterbatch (auf Polypropylenbasis mit 50 % Harzanteil) mit einem Erweichungspunkt von 140°C, wobei das Kohlenwasserstoffharz ein hydriertes oligomeres Cyclopentadienharz ist.

### Beispiel 2

Es wurde eine Folie gefertigt wie in Beispiel 1, deren Kernschicht jedoch eine Dicke von 17 µm aufwies.

### Beispiel 3

Es wurde eine Folie gefertigt wie in Beispiel 1, deren Kernschicht jedoch eine Dicke von 21 µm aufwies.

### Vergleichsbeispiel 1

Es wurde eine dreischichtige Folie gefertigt wie in Beispiel 2, die jedoch keine Mantelschichten aufwies und deren Kernschichtdicke um 2 µm dicker war.

### Vergleichsbeispiel 2

Es wurde eine Folie gefertigt wie in Beispiel 2, die jedoch keine Mantelschichten (dreischichtiger Aufbau) aufwies und deren Kernschichtdicke um 2 µm dicker war. Außerdem wies die Kernschicht nur einen Harzgehalt von 10 % auf.

### Vergleichsbeispiel 3

Es wurde eine dreischichtige Folie gefertigt, deren Aufbau folgender war:

### Deckschichten

- Dicke:: 0,6 µm
- Material:: Propylen/Ethylen-Copolymer
0,8 % Polydimethylsiloxan
0,33 % SiO₂

### Kernschicht

- Dicke:: 27,8 µm
- Material:: 30 % Kohlenwasserstoffharzmasterbatch (wie in Beispiel 1)
70 % Polypropylen (wie in der Kernschicht in Beispiel 1)
Folgende Tabelle zeigt, daß die erfindungsgemäßen Folien des genannten Typs bezüglich der Migrationseigenschaften unter Beibehaltung der Wasserdampfsperrwirkung erhebliche Vorteile hat.

| | Wddu/g/m²d | Globalmigration/mg/dm² |
|---|---|---|
| Beispiel 1 | 1,25 | 13 |
| Beispiel 2 | 0,81 | 19 |
| Beispiel 3 | 0,64 | 21 |
| Vergleichsbeispiel 1 | 0,84 | 28 |
| Vergleichsbeispiel 2 | 0,90 | 21 |
| Vergleichsbeispiel 3 | 0,51 | 36 |

### Meßverfahren

Bestimmung der Wasserdampfdurchlässigkeit:
Die Wasserdampfdurchlässigkeit wurde gemäß DIN 53 122, Teil 2, bei 23°C und 85 % relative Luftfeuchtedifferenz bestimmt.

Bestimmung der Globalmigrationswerte:
Die Globalmigrationswerte (Simulanzlösemittel: HB 307; 10 d; 40°C) wurden entsprechend der Methode von K. Figge, Bundesgesundheitsblatt 18, 27 (1975) durchgeführt. Es wurden jeweils vier unabhängige Parallelbestimmungen vorgenommen. Die Genauigkeit ist mit +/- 1 mg/dm² zu beziffern.

## Patentansprüche

1. Orientierte, insbesondere biaxial orientierte siegelfähige Polypropylenfolie mit verbesserter Wasserdampfsperrwirkung bei erheblich verminderter Globalmigration für Verpackungszwecke, dadurch gekennzeichnet, daß sie wie folgt aufgebaut ist:
A B C B A
a) wobei C eine Basisschicht aus Polypropylen und einem Kohlenwasserstoffharz ist, das eine Molmasse bis zu etwa 2000 g/mol aufweist und einen Erweichungspunkt über 130° hat
b) und B die Kohlenwasserstoffharz-freien Mantelschichten aus hochisotaktischem Polypropylen mit einer Isotaktizität >94 % sind, wobei das Verhältnis der Dicke einer Mantelschicht zur Dicke der Basisschicht zwischen 0,01 und 0,1 liegt
c) und zwei Deckschichten aus einem heißsiegelbaren Polyolefin-Co- oder Terpolymeren sind, wobei diese Deckschichten mindestens ein Antiblockmittel, ein Gleitmittel und ein Antistatikum enthalten.

2. Siegelfähige Folie nach dem Anspruch 1, dadurch gekennzeichnet, daß die Basisschicht C ein Kohlenwasserstoffharz aus der Gruppe der Petroleumharze, Terpenharze oder Kohlenteerharze enthält.

3. Siegelfähige Folie nach Anspruch 2, dadurch gekennzeichnet, daß das Kohlenwasserstoffharz ein hydriertes, oligomeres Cyclopentadienharz ist.

4. Siegelfähige Folie nach den Ansprüchen 1 bis 3, dadurch gekennzeichnet, daß die Deckschichten A im wesentlichen aus
- statistische Propylen/Ethylen-Copolymere
- statistische Propylen/Buten(1)-Copolymere
- statistische Propylen/Ethylen/Olefin-Terpolymere
- Mischungen aus zwei oder drei der vorstehenden Polymere.
bestehen.

5. Siegelfähige Folie nach den Ansprüchen 1 bis 4, dadurch gekennzeichnet, daß die Deckschichten als Antiblockmittel Siliciumdioxid, Calciumcarbonat, Polymethylmethacrylat, Polycarbonat, Silikon oder HDPE (High-Density-Poly-Ethylen) enthalten.

6. Siegelfähige Folie nach den Ansprüchen 1 bis 5, dadurch gekennzeichnet, daß die Basisschicht C und/oder die Deckschichten A ein Gleitmittel enthalten.

7. Siegelfähige Folie nach den Ansprüchen 1 bis 6, dadurch gekennzeichnet, daß die Basisschicht C und/oder die Deckschichten A ein Antistatikum enthalten.

8. Folie nach einem der Ansprüche 1 bis 7, dadurch gekennzeichnet, daß sie ein oder beidseitig Corona-, Flamm-, Plasma- oder Fluor vorbehandelt ist.

9. Verwendung der siegelfähigen Folie nach einem oder mehreren der Ansprüche 1 bis 8 als Verpackungsmaterial.

## Claims

1. An oriented, in particular biaxially oriented, sealable polypropylene film having an improved barrier action to water vapour together with a considerably reduced global migration and which is intended for packaging purposes, characterized in that it has the following structure:
A B C B A
a) wherein C is a base layer of polypropylene and a hydrocarbon resin having a molecular weight of up to about 2,000 g/mol and a softening point above 130°C,
b) wherein B represents jacket layers, which are free from hydrocarbon resin, of highly isotactic polypropylene having an isotacticity >94%, the ratio of the thickness of the jacket layer to the thickness of the base layer being between 0.01 and 0.1, and
c) wherein A represents two surface layers of a heat-sealable polyolefin co- or terpolymer, said surface layers comprise at least one antiblocking agent, a lubricant and an antistatic agent.

2. A sealable film according to Claim 1, characterized in that the base layer C comprises a hydrocarbon resin from the group consisting of petroleum resins, terpene resins or coal tar resins.

3. A sealable film according to claim 2, characterized in that the hydrocarbon resin is a hydrogenated oligomeric cyclopentadiene resin.

4. A sealable film according to claims 1 to 3, characterized in that the surface layers A substantially comprise
- random propylene/ethylene copolymers
- random propylene/1-butene copolymers
- random propylene/ethylene/olefin terpolymers
- mixtures of two or three of the above polymers.

5. A sealable film according to claims 1 to 4, characterized in that the surface layers comprise silicon dioxide, calcium carbonate, polymethyl methacrylate, polycarbonate, silicone or HDPE (high-density polyethylene) as the antiblocking agent.

6. A sealable film according to claims 1 to 5, characterized in that the base layer C and/or the surface layers A comprise a lubricant.

7. A sealable film according to claims 1 to 6, characterized in that the base layer C and/or the surface layers A comprise an antistatic agent.

8. A film according to one of claims 1 to 7, characterized in that it is pretreated on one or both sides by corona, flame, plasma or fluorine pretreatment.

9. Use of the sealable film according to one or more of claims 1 to 8 as a packaging material.

## Revendications

1. Feuille de polypropylène apte au scellement, orientée, en particulier soumise à une orientation biaxiale, possédant un effet amélioré de blocage de la vapeur d'eau, conjointement avec une migration globale considérablement diminuée, destinée à des objets d'emballage, caractérisée en ce qu'elle possède la composition ci-après:
A B C B A
a) où C représente une couche de base constituée par du polypropylène et par une résine d'hydrocarbure, qui présente une masse molaire allant jusqu'à environ 2000 g/mole et qui possède un point de ramollissement supérieur à 130°,
b) et B représente les couches d'enveloppe exemptes de résine d'hydrocarbure, constituée par du polypropylène à teneur isotactique élevée, dont l'isotacticité est >94%, le rapport de l'épaisseur d'une couche d'enveloppe à l'épaisseur de la couche de base se situant entre 0,01 et 0,1,
c) et deux couches de recouvrement constituées par un copolymère ou un terpolymère de polyoléfine thermosoudable, ces couches de recouvrement contenant au moins un agent d'antiblocage, un agent de glissement et un agent antistatique.

2. Feuille apte au scellement selon la revendication 1, caractérisée en ce que la couche de base C contient une résine d'hydrocarbure choisie parmi le groupe comprenant les résines de pétrole, les résines terpéniques ou les résines de goudron de houille.

3. Feuille apte au scellement selon la revendication 2, caractérisée en ce que la résine d'hydrocarbure est une résine oligomère hydrogénée de cyclopentadiène.

4. Feuille apte au scellement selon les revendications 1 à 3, caractérisée en ce que les couches de recouvrement A sont constituées essentiellement par
- des copolymères statistiques de propylène/éthylène
- des copolymères statistiques de propylène/butène (1)
- des terpolymères statistiques de propylène/éthylène/oléfine
- des mélanges de deux ou trois des polymères indiqués ci-dessus.

5. Feuille apte au scellement selon les revendications 1 à 4, caractérisée en ce que les couches de recouvrement contiennent, à titre d'agent d'antiblocage, le dioxyde de silicium, le carbonate de calcium, le polyméthacrylate de méthyle, le polycarbonate, le silicium ou le HDPE (High-Density-Poly-Ethylen).

6. Feuille apte au scellement selon les revendications 1 à 5, caractérisée en ce que la couche de base C et/ou les couches de recouvrement A contiennent un agent de glissement.

7. Feuille apte au scellement selon les revendications 1 à 6, caractérisée en ce que la couche de base C et/ou les couches de recouvrement A contiennent un agent antistatique.

8. Feuille selon une des revendications 1 à 7, caractérisée en ce qu'elle a été soumise, sur une face ou sur les deux faces, d'un prétraitement par décharges à effluves négatives, à la flamme, au plasma ou au fluor.

9. Utilisation de la feuille apte au scellement selon une ou plusieurs des revendications 1 à 8, comme matière d'emballage.
